# EUROPÄISCHE PATENTSCHRIFT

(11) **EP 1 372 860 B1**
(45) Veröffentlichungstag und Bekanntmachung des Hinweises auf die Patenterteilung: **26.04.2006**
(21) Anmeldenummer: 02722092.0
(22) Anmeldetag: 18.02.2002
(51) Int. Cl.: B03B 9/04, B03B 9/06, B02C 13/18, B02C 13/28

(54) **ANLAGE UND VERFAHREN FÜR DIE BEHANDLUNG VON METALLHALTIGEM HAUFWERK**
FACILITY AND METHOD FOR TREATING MUCK CONTAINING METAL
INSTALLATION ET PROCEDE DE TRAITEMENT DE MINERAIS METALLIFERES

(30) Priorität: 19.02.2001 DE 10108003
(43) Veröffentlichungstag der Anmeldung: 02.01.2004
(73) Patentinhaber: Schons, Georg, 78253 Eigeltingen (DE)
(72) Erfinder: Schons, Georg, 78253 Eigeltingen (DE)
(74) Vertreter: Hiebsch, Gerhard F.
(86) Internationale Anmeldenummer: PCT/EP2002/001694
(87) Internationale Veröffentlichungsnummer: WO 2002/066164

(56) Entgegenhaltungen:
- WO-A-91/08836
- DE-A- 19 751 629
- DE-A- 19 911 010
- US-A- 3 749 322
- US-A- 4 044 956
- US-A- 5 174 509
- SCHEFFLER J ET AL: "ERZEUGUNG VERWERTBARER PRODUKTE DURCH AUFBEREITUNG UND VERGLASUNG VON ROSTASCHEN AUS DER MULLVERBRENNUNG" ENTSORGUNGS PRAXIS, BERTERSMANN FACHZEITSCHRIFTEN GMBH, DE, Bd. 13, Nr. 12, 1. Dezember 1995 (1995-12-01), Seiten 26-30, XP000539280 ISSN: 0724-6870
- ESSER K-R: "STRASSENBAUSTOFFE AUS DER MUELLVERBRENNUNG. ROAD CONSTRUCTION MATERIALS FROM REFUSE INCINERATION" AT - AUFBEREITUNGS TECHNIK - MINERAL PROCESSING, AT VERLAG FUER AUFBEREITUNGS, WIESBADEN, DE, Bd. 39, Nr. 5, 1. Mai 1998 (1998-05-01), Seiten 243-246, XP000755732 ISSN: 1434-9302

## Beschreibung

Die Erfindung betrifft eine Anlage zum Rückgewinnen von Eisen- und NE-Metallen aus der Schlacke einer Müllverbrennungsanlage od. dgl. Einrichtung nach dem Oberbegriff des Patentanspruches 1 sowie ein Verfahren dazu.

Eine derartige Anlage bietet ein Aufsatz aus Bertelsmann, Entsorgungspraxis aus dem Dezember 1995 (Scheffler, J. e. a. "Erzeugung verwertbarer Produkte durch Aufbereitung...") anhand einer Aufbereitungsanlage von Rostasche aus der Müllverbrennung. Die Rostasche gelangt mit einer -- durch einen Nassentschlacker bedingten -- Restfeuchte zwischen 15 und 25 Gew.-% auf ein Grobsieb mit einem Trennschnitt von 45 mm. Diese Klassierstufe trennt die groben Inhaltsstoffe ab und führt sie einem Magnetscheider für eine gesonderte Behandlung zu. Ein Grobkornbereich mit überwiegend groben Verwachsungen macht eine Trennung in die einzelnen Stoffgruppen relativ problemlos. So werden die groben Eisenschrottpartikel über die einfache Magnetscheidung -- vorzugsweise einen Trommelmagneten -- abgeschieden. Dann erfolgt eine Nachbehandlung durch eine selektive Prallzerkleinerung in einer Prallmühle in Kombination mit einer nochmaligen Magnetscheidung mit einem Überbandmagneten. Die Produkte aus dieser Behandlung sind ein hochreiner Eisenschrott und relativ eisenarme Abgänge. Diese unmagnetischen Abgänge des Magnetscheiders sowie des Überbandmagneten setzen sich im wesentlichen aus Bauschutt, Steinen, Nichteisenmetallen und groben unverbrannten Bestandteilen zusammen. Ein Universalzerkleinerer, etwa eine Hammermühle oder ein Shredder, zerkleinert diese Bestandteile und führt sie erneut der der ersten Klassierstufe zu.

Das Unterkorn des genannten Trennschnittes gelangt zu einer Warmluftsichtung und wird nach dieser auf einem Feinsiebals zweite Klassierstufe mit einem Trennschnitt von 6 mmbearbeitet. Ein Überbandmagnet hebt die Eisenschrottpartikel aus dem Gutstrom heraus, der abgetrennte Fe-Schrott wird der dem Magnetscheider für das Grobkorn nachgeordneten Prallmühle zugeführt, also vor einer Verwertung ebenfalls einer Nachbehandlung zum Abtrennen angesinterter Aschepartikel von Eisenschrott unterzogen. Das vom Überbandmagneten nicht abgetrennte Material wird über einen Starkfeldtrommelmagnetscheider geführt, der dem Gutstrom Metalloxide mit in der Asche verbliebene Eisenpartikel enthält. Letztere sind stark mit nichtmetallischen Verunreinigungen behaftet. Die von Metallen weitgehend befreite Rostasche wird einer Prallmühle aufgegeben und deren Austrag jener Klassierstufe zugeleitet.

Deren Unterkorn durchwandert ein Starkfeldscheider sowie dann einen Wirbelstromscheider und verlässt diesen als aufbereitete Rostasche:

Ebenfalls schildert WO 91/08836 ein Aufbereitungsverfahren für Schlacken aus der Stahlproduktion mit einer Mehrzahl von Zerkleinerungs- und Trennstufen, um möglichst viel Stahl bzw. Eisen aus der Schlacke zurückzugewinnen. Die Schlacke selbst kann dann zur Herstellung von Straßendecken eingesetzt werden.

Eine andere Anlage ist in der DE 44 03 777 A1 anhand einer Sichtermühle mit vertikal angeordnetem Rotor beschrieben, bei der Shredderabfälle nach einem Magnetscheider mittels einer Dosierrinne oder einer Förderschnecke der obersten von mehreren von der Rotorwelle abragenden Etagen von Schlaghämmern zugefördert werden. Die radiale Erstreckung der Schlaghämmeretagen nimmt nach unten hin zu, und über der Zuführeinrichtung sind mit der Rotorwelle Schlagleisten verbunden, die als Abweiser für Grobgut dienen sollen. Das prallzerkleinerte schlagzähe Grobgut, das vorwiegend aus thermoplastischem Kunststoff, Gummi und Metallstücken besteht, wird nach unten ausgetragen und über einen unterhalb der Sichtermühle angeordneten Wirbelstromscheider zugeführt, wo die Trennung von Nichteisenmetall, Kunststoff und restlichen Eisenpartikeln erfolgt. Zur Kühlung und Trocknung verwendetes Gas tritt überwiegend durch die Materialaustrittsöffnungen des Wirbelstromscheiders ein, steigt gegen die Transportrichtung des Grobgutes auf und wird aus der Mühle über der obersten Etage der Mikroverwirbelungszone zusammen mit dem Leicht- und Feingut sowie Wasserdampf in einen Staubabscheider abgesaugt; dort erfolgt eine Trennung der Feststoffe von Trägergas und Wasserdampf.

Die US-A-3 749 322 beschäftigt sich mit der kostengünstigen Rückgewinnung von Kupfer- und Aluminiumteilen aus Drahtabfall. Hier sind einer zweistufigen Granulierungseinrichtung zwei Siebstationen nachgeordnet. Der Überlauf der ersten Siebstation wird zu einem Zyklon geführt, und der Überlauf der zweiten Siebstation ist durch Fördermittel -- gegebenenfalls über eine dritte Granulierungsstufe -- mit der ersten Siebstation verbunden, während das Feinkorn der zweiten Siebstation, vor allem Drahtpartikel, zu einer Mühle ausgetragen wird.

Bei der Rückgewinnung von NE-Metallen ist Schlacke aus Müllverbrennungsanlagen von besonderem Interesse, da
- sie ein Massenabfallstoff ist -- etwa 3,0 Mio. t/a in Deutschland und 0,7 Mio t in der Schweiz --;
- die Schlacke nach der Aufbereitung wiederverwendet werden,
- bzw. nach der Metallentfrachtung deutlich kostengünstiger entsorgt bzw. verwertet werden kann als nicht aufbereitete Schlacke;
- insbesondere die NE-Metallinhalte so groß sind, dass sich eine spezielle weitergehende Aufbereitung wirtschaftlich darstellen lässt.

Aus Analysewerten der Schlacken von mehrjährigen internen Versuchen geht beispielsweise hervor, dass der Eisenanteil bei mindestens 16 % liegt, die Aluminiumgehalte im Durchschnitt bei etwa 5 % und die Kupfergehalte bei etwa 1 % liegen.

Die wenigen deutschen Schlackeaufbereiter, die einen Wirbelstromscheider installiert haben, geben meist keine Auskunft über NE-Metallgehalte oder reden von 1 bis 3 % Aluminiumanteil. Es wird jedoch keine Aussage darüber gemacht, wieviel Aluminium verlorengeht, weil es noch in der Schlacke eingeschlossen ist.

Die Gründe, warum dieses riesige Wertstoffpotential bislang noch nicht oder nur ungenügend genutzt wird, sind u. a:
- die Betreiber von MVA und KVA sehen ihre Kernkompetenz nicht in der Schlackeaufbereitung bzw. beschränken sich meist auf die einfach zu realisierende Eisenentfrachtung;
- die externen Aufbereiter, die sich um diese Materialien bewerben, kommen meist aus der Baustoffbranche und haben in der Regel nicht das erforderliche Aufbereitungs-Know-how und das Wissen um die Metallinhalte und deren Wertigkeiten;
- das ohne weitergehende Zerkleinerung mittels Wirbelstromscheider zurückgewonnene Aluminium und Kupfer hat noch soviel Schlackenanhaftungen, dass nur geringe Erlöse dafür erzielt werden;
- zur optimalen Rückgewinnung der NE-Metallen muss die Schlacke fein zerkleinert sowie speziell aufbereitet werden und verliert somit ihren "Wert" als Baumaterial für den Straßen- und Wegebau. Dadurch fehlt den konventionellen Baustoffaufbereitern eine weitere Motivation.

Nach einer Veröffentlichung des Umweltbundesamtes im September 2000 haben von den vorhandenen thermischen Behandlungsanlagen für Rest-Siedlungsabfall in Deutschland etwa 30 % keine Schlackenaufbereitung, etwa 54 % der Anlagen betreiben die Schlackenaufbereitung selbst und etwa 17 % der Anlagen haben externe Aufbereiter beauftragt.

Der meist mittels überband- oder Trommelmagnet aus der Schlacke separierte Schrott wird i.d.R. ohne weitere Vorbehandlung über die Shredderindustrie verwertet. Aufgrund der Verunreinigungen mit Restschlacke (etwa 5 bis 20%) sowie anderen metallischen Störstoffen -- insbesondere Kupferwerden in Deutschland geringe Vergütungen für Schrott aus MVA's gezahlt, die derzeit bei etwa 20 bis 30 DEM/t liegen. 1996 wurden 0,25 Mio t Schrott aus MVA-Schlacken zurückgewonnen, was 7,8 % der insgesamt aufbereiteten Schlacken entspricht.

Um den Schrott aus MVA's in Stahlwerken zu verwerten, muss er den Anforderungen der Stahlschrottsortenliste 46 des Bundesverbandes der Deutschen Stahl-Recycling-Wirtschaft e.V. genügen:
- Schüttgewicht (i.tr.) mindestens 0,9 t/m^{3;}
- Korngröße Obergrenze 50 bis 70 mm max. 5 % < 5 mm;
- Fe-Gehalt metallisch mindestens 92 %;
- Nässe gesonderte Vereinbarung.

Um diesen Anforderungen zu genügen, wird der MVA-Schrott i.d.R. geshreddert und anschließend gemeinsam mit dem Shredderschrott als sog. Sorte 4 vermarktet.

Bei einem Versuch mit 100 t Schlacken wurde ermittelt, dass der Fe-Anteil der Schlacke im Bereich < 4 mm bei etwa 14 % liegt sowie im Bereich zwischen 4 und 45 mm bei etwa 16 %.

Für die Verwertung der NE-Metalle sind keine bundesweiten Mindestanforderungen festgelegt. Die Vergütung erfolgt entsprechend dem Metallgehalt und je nach Reinheit mit unterschiedlich hohen Abschlägen. Bei zu großen Anteilen von Fremdstoffen wird die Vergütung um die Entsorgungskosten für die Materialien verringert. Bei den heute erzeugten minderen Qualitäten liegt die NE-Vergütung bei unter 800 DEM/t.

Die Zielkriterien für die NE-Rückgewinnung sind:
hohe Ausbringungsraten;
möglichst hohe Reinheiten;
frei von metallischem Eisen;
schüttfähige Form.

Bei der in Deutschland im Vordergrund stehenden Verwertung der Schlacke als Baumaterial ist in erster Linie ein möglichst grobes Korn -- 32 bis 45 mm -- erforderlich, so dass die Verfahrenstechnik der Schlackenaufbereitungsanlagen darauf ausgerichtet ist. Dadurch verliert man natürlich die NE-Metalle, die u.U. noch in diesem groben Korn eingeschlossen sind.

Es hat sich gezeigt, dass die Wirbelstromscheidertechnik geeignet ist, um aus Schlacken NE-Metalle zu separieren. Der im wesentlichen aus zwei Gurttrommeln bestehende Wirbelstromscheider hat in der vorderen Gurttrommel ein sich schnell rotierendes Permanentmagnetpolsystem. Durch die hohe Frequenz des Magnetfeldwechsels werden starke Wirbelströme in den NE-Metallen erzeugt. Diese führen ihrerseits zu Magnetfeldern, die dem Äußeren entgegengesetzt wirken. Aus diesem Grunde werden die NE-Teile abgestoßen und in einer steilen Wurfparabel aus dem übrigen Materialstrom herausgeschleudert. Die nichtleitenden Materialien durchfahren aufgrund der Bandgeschwindigkeit auch eine Wurfparabel, die aber in der Regel flacher verläuft als die der beschleunigten NE-Teilchen. Durch das Setzen eines Trennbleches, auch Splitter genannt, wird der Leiter vom Nichtleiter getrennt. Um ein möglichst reines NE-Produkt zu erhalten, wird der Splitter ziemlich weit nach hinten gestellt. Dies hat aber den Nachteil, dass die Ausbeute sinkt. Fährt man allerdings auf maximale Ausbeute, so kann die NE-Fraktion soweit verunreinigt werden, dass eine Nachreinigung erfolgen oder man teilweise sehr hohe Abschläge bei der Vergütung einkalkulieren muss.

Aus Versuchen mit MVA-Schlacken mittels der bekannten Rotorprallmühlentechnologie sowie aus dem Stande der Technik zur Schlackenaufbereitung ist bekannt, dass durch Metallentfrachtung die Einbaudichte der Schlacke im Deponiebau um mindestens 19 % zunimmt, der Fe-Anteil zwischen 14 % und 16 % zwei der Fe-Rückgewinnungsanteil der Schlacke bei ausgeführten Anlagen bei etwa 10 % liegt. Die Vermarktung des Schrottes mit Schlackeanhaftungen führt in der Schweiz i.d.R. zu Entsorgungskosten für den Schrott bzw. in Deutschland zu niedrigen Schrotterlösen von 25 bis 30 DEM/t. Der in Müllverbrennungsschlacken vorhandene Anteil der NE-Metalle liegt zwischen 4,8 %/13/ und 7,0 %, wobei die NE-Rückgewinnung bei ausgeführten Anlagen sich derzeit nur um etwa 0,5 % bewegt. Materialien aus Edelstählen (Chrom-Nickel-Stähle) werden mit der konventionellen Schlackenaufbereitungstechnik nicht separiert.

In Kenntnis dieser Gegebenheiten hat sich der Erfinder das Ziel gesetzt, eine Verbesserung der Rückgewinnung von Eisen und NE-Metallen aus Schlacken von Müllverbrennungsanlagen anzubieten sowie eine sinnvolle Verwertung von Metallen aus Abfällen zu ermöglichen und für mehrere Materialien innovative neue Lösungen anzubieten.

Zur Lösung dieser Aufgabe führt die Lehre des unabhängigen Anspruches; die Unteransprüche geben günstige Weiterbildungen an.

Erfindungsgemäß wird zum Rückgewinnen von Eisen- und NE-Metallen aus der Schlacke einer Müllverbrennungsanlage od. dgl. eine Anlage gemäße Anspruch 1 bzw. ein Verfahren gemäß Anspruch 20 vorgesehen.

Als günstig hat es sich erwiesen, dass der Eingangssiebstation ein Vorsieb für eine Körnung von mehr als etwa 100 mm vorgeordnet ist.

Nach einem anderen Merkmal der Erfindung ist dem Austrag für magnetisches Haufwerk des Metallabscheiders ein das Eisen nachreinigendes Trommelsieb mit einem bevorzugten Siebschnitt als weitere Siebstation von etwa 10 mm oder gegebenenfalls auch von etwa 25 mm nachgeordnet.

Im Rahmen der Erfindung liegt es, dass der Austrag für nicht magnetisches Haufwerk des Metallabscheiders der Eingangssiebstation bzw. der vertikalen Prallmühle jeweils in eine Siebstation zur Trennung von Feinkorn und Mittelkorn mündet, wobei letzteres bevorzugt zwischen 5 mm und 45 mm liegt. Die Siebstation kann -- nach der vertikalen Prallmühle -- beispielsweise als Doppeldeckersieb oder auch als Spannwellensieb nach dem Metallabscheider der Eingangssiebstation gestaltet sein.

Erfindungsgemäß ist der Austrag für das Mittelkorn der Siebstation nach dem Metallabscheider der Eingangssiebstation zum Einlauf der vertikalen Prallmühle geführt, der Austrag für das Mittelkorn der Siebstation nach der Eingangssiebstation und/oder der Austrag der Siebstation nach der vertikalen Prallmühle zu einer Rotormühle. Durch diese werden spröde Bestandteile zerkleinert und duktile Metalle verkugelt.

Nach einem anderen Merkmal der Erfindung soll der Austrag für das Überkorn der Siebstation nach der vertikalen Prallmühle zu dieser zurückgeführt sein oder an einen Wirbelstromscheider angeschlossen sein.

Um auch den Effekt des Verwirbelns einsetzen zu können, soll dem Austrag der Rotorprallmühle ein Wirbelstromscheider nachgeordnet sein, der seinerseits an einen Metallabscheider der Rotorprallmühle anschließen kann und einer Austragsleitung für Nichtleiter an die vertikale Prallmühle bzw. an die Rotorprallmühle.

Vom Wirbelstromabscheider geht erfindungsgemäß eine Austragsleitung für Leitermaterial aus, die an einem Metallseparator mündet.

Das erfindungsgemäße Verfahren fußt auf den erprobten und konventionellen Schlackeaufbereitungsanlagen; in einem modifizierten Verfahren wird ein Schlackenfeinkorn erzeugt, und es werden möglichst alle Eisen sowie NE-Metalle und Edelstähle freigelegt sowie separierfähig gemacht. Der Grobschrott wird speziell nachbehandelt, so dass der Schrott ohne das teuere Nachshreddern zu einem höheren Erlös vermarktet zu werden vermag. Die Rotorprallmühlentechnik wird zur Rückgewinnung von sauberen NE-Metallen und Feinschrott in die Schlackenaufbereitungstechnik integriert und Edelstahl separiert.

Nach einem weiteren Merkmal der Erfindung wird Schlacke aus einem Müllverbrennungsverfahren als Behandlungsgut zu Schlackenfeinkorn verarbeitet, und die Anteile an Eisen- und/oder NE-Metallen weden freigelegt sowie anschließend getrennt. Dazu hat es sich als günstig erwiesen, das Haufwerk bis etwa 100 mm Korngröße einer Siebstation zuzuführen und darin in eine Feinkornfraktion bis etwa 45 mm und ein überkorn von etwa 45 mm bis etwa 100 mm zu trennen; sowohl die Feinkornfraktion als auch die Überkornfraktion sollen einem Magnetscheider zugeführt werden.

Zudem wird der Anteil an Eisen nachgereinigt sowie der Anteil an NE-Metallen nachveredelt. Es wird eine Reinheit des Eisens und/oder der NE-Metalle von mehr als 90 % erzielt.

Als günstig hat es sich erwiesen, das Unterkorn bei einer Siebgröße von 40 mm bis 50 mm nachzusortieren, wobei das Unterkorn bis etwa 40 mm bzw. 50 mm einem Magnetabscheider und das verbleibende Unterkorn bis etwa 100 mm einem anderen Magnetabscheider -- insbesondere einer Magnettrommel -- zugeführt wird.

Im Rahmen der Erfindung liegt es, dass die nicht magnetischen Anteile aus dem Magnetabscheider der höheren Kornfraktion einer vertikalen Prallmühle zugeführt werden und darin die Schlacke gebrochen wird; der Austrag der vertikalen Prallmühle soll einem Magnetscheider zugeführt werden. Im übrigen sollen die magnetischen Anteile des Haufwerkes aus dem Magnetabscheider nach diesem einem Trennschnitt bei etwa 10 mm zugeführt werden. In einer anderen Anwendung werden jene magnetischen Anteile des Haufwerkes aus dem Magnetabscheider nach diesem einem Trennschnitt bei etwa 25 mm zugeführt, und das Unterkorn wird einer Rotorprallmühle aufgegeben. Der nicht magnetische Austrag eines dem Trennschnitt dienenden Siebes indessen soll einer Rotorprallmühle zugeführt werden.

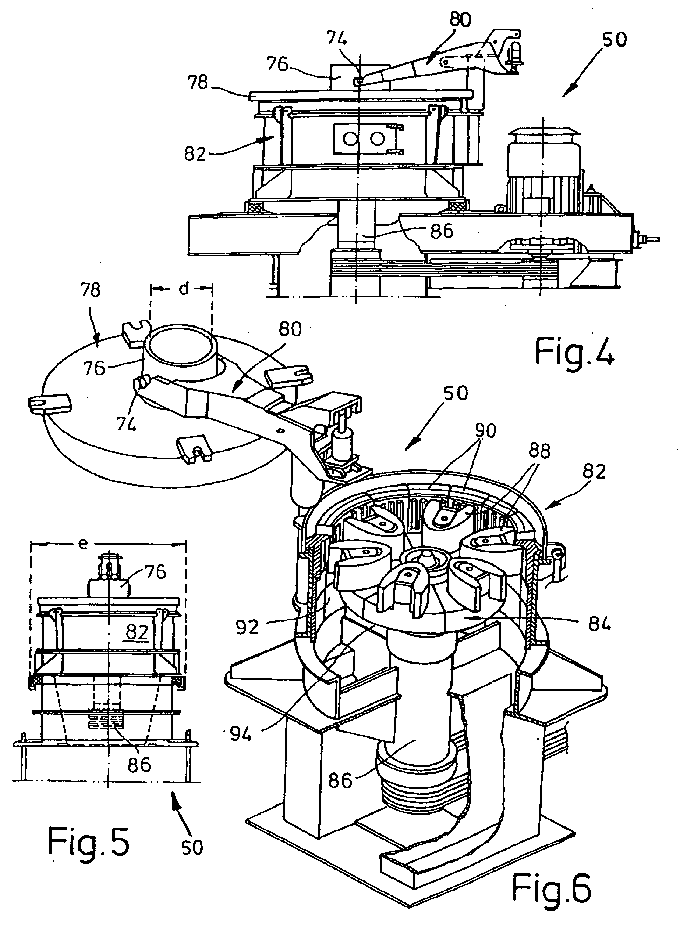

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in drei Figuren jeweils einen Stammbaum zu erfindungsgemäßen Verfahren sowie in den Fig. 4 bis 6 Ansichten einer für diese Verfahren herangezogenen Rotorprallmühle.

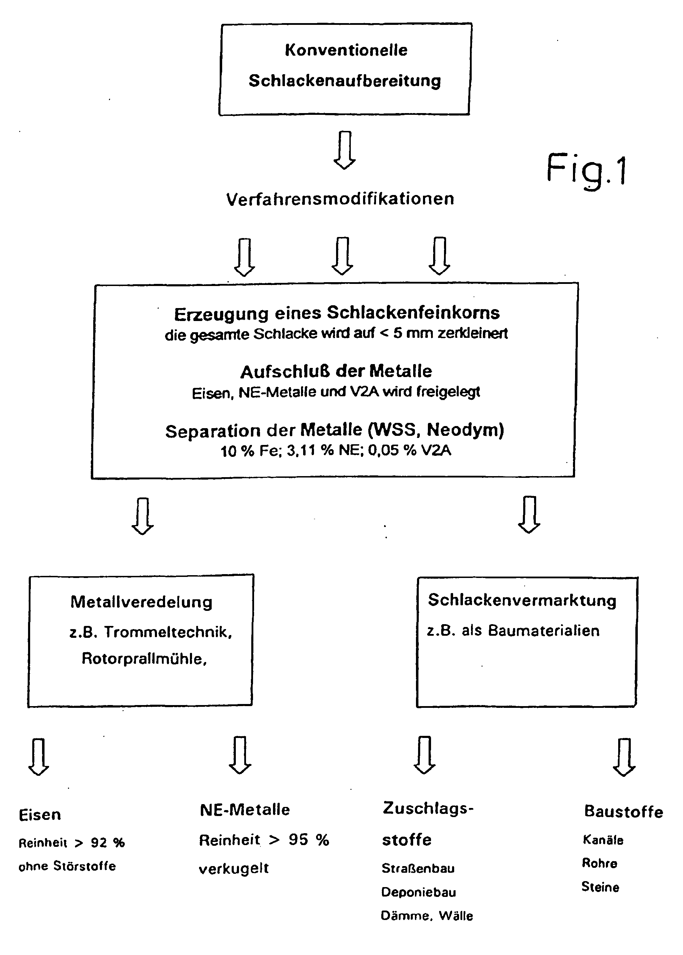

Fig. 1 bietet einen Überblick über die erfindungsgemäße Vorgehensweise. Aus der Schlacke einer konventionellen Schlackenaufbereitung wird durch Verfahrensmodifikationen ein Schlackenfeinkorn < 5 mm erzeugt, die Metalle -- Fe/NE-Metalle/Stähle -- werden freigelegt und separiert; das durchschnittliche Ausbringen beträgt beispielshaft

| Eisen | (Fe) | 10 %; |
|---|---|---|
| Nichteisen-Metalle | (NE) | 3,11 %; |
| Stähle | (V2A) | 0,05 %. |

Das Eisen wird -- beispielsweise mit einer Trommel -- zu Eisen einer Reinheit von > 92 % nachgereinigt, und mit einer Rotorprallmühle werden NE-Metalle verkugelt sowie zu einer Reinheit von mehr als 95 % nachveredelt. Die Restschlacke wird als Zuschlagwerkstoff im Straßen- oder Deponiebau eingesetzt oder als Baustoff für Bausteine, Rohre und Kanäle.

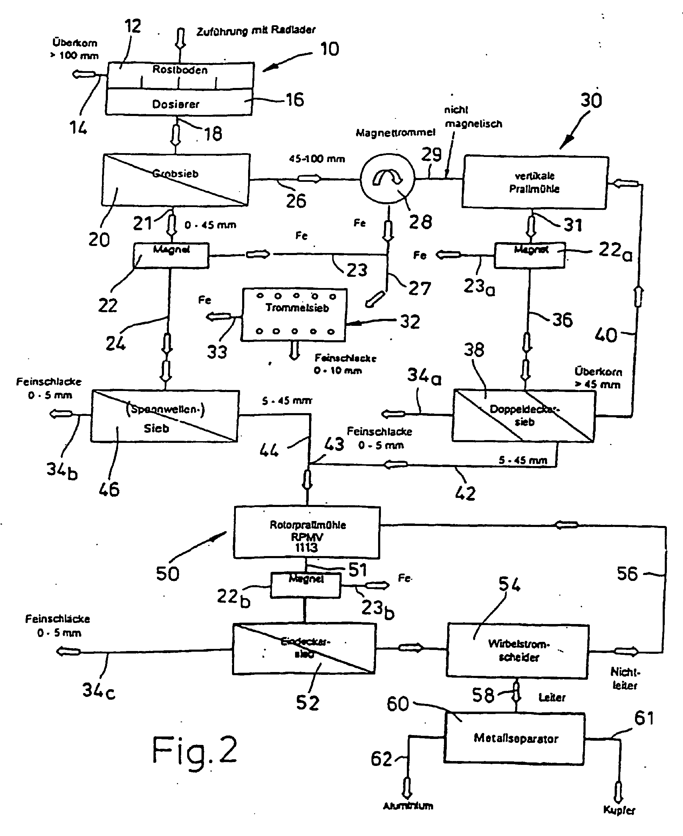

Beim Verfahren nach Fig. 2 wird die Schlacke mittels eines Radladers od. dgl. einem Aufgabebunker 10 zugeführt. Durch einen integrierten Rostboden 12 wird das Überkorn von mehr als 100 mm aussortiert und gelangt zu einem Austrag 14; das Überkorn wird entweder zurück zur Verbrennung gebracht oder gesondert vorzerkleinert.

Unterhalb des Rostbodens 12 ist ein Dosierer 16 angeordnet, dessen Austragsleitung 18 zu einem Grobsieb 20 mit einem Siebschnitt bei 45 mm führt, von dem das Fein- oder Unterkorn bis 45 mm durch einen Feinkornaustrag 21 zu einem Magnetabscheider 22 gelangt, dank dessen aus dem Unterkorn das Fe ebenso ausgeschieden wird wie aus - mittels eines Austrages bzw. einer Leitung 26 -- dem Grobsieb 20 als Siebstation entnommenem Haufwerk der Größe 45 bis 100 mm an einer Magnettrommel 28. In eine Fe-Austragsleitung 27 dieser Magnettrommel 28 mündet die Fe-Austragsleitung 23 jenes Magnetscheiders 22. Dessen magnetischer Anteil wird also -- zusammen mit der magnetischen Fraktion aus der Magnettrommel 28 -- zur Eisenreinigung geführt.

Der Magnettrommel 28 ist durch eine Leitung 29 für nicht magnetischen Austrag eine vertikale Prallmühle 30 oder ein entsprechendes Aggregat zur Vorzerkleinerung nachgeschaltet, welche die Schlacke vorbrechen soll. Das dabei freigelegte Eisen wird mittels eines Magnetscheiders 22ₐ aus dem Produktstrom separiert. Die Fe-Austragsleitung 23ₐ des Magnetscheiders 22ₐ mündet -- wie auch die Fe-Austragsleitung 27 der Magnettrommel 28 -- andernends in ein Trommelsieb 32, von dem eine Fe-Austragsleitung 33 für Grobkorn und bodenwärtig ein Feinschlackeaustrag 34 ausgehen. Die in der Siebtrommel 32 freigeschlagene nicht magnetische Schlacke mit Überkornmaß wird nach der Siebtrommel 32 ausgeschleust und der Prallmühle 30 wieder zugeführt.

Dem der Prallmühle 30 nachgeschalteten Magnetabscheider 22ₐ folgt in einer Leitung 36 ein Doppeldeckersieb 38 mit Feinschlackeaustrag 34ₐ und Überkornaustrag 40, in dem die vom Eisen separierte Schlacke in zwei Siebschnitte zerlegt wird. Der Überkornaustrag 40 ist anderseits mit der Prallmühle 30 verbunden und führt Haufwerk über 45 mm zu dieser zurück. Eine weitere -- bodenwärtige -- Austragsleitung 42 für eine Mittelkornfraktion von 5 bis 45 mm trifft sich an einer Knotenstelle 43 mit der Austragsleitung 44 einesdem Feinkornmagnetscheider 22 mittels einer Austragsleitung 24 nachgeschalteten - im gewählten Ausführungsbeispiel als Spannwellensieb ausgestalteten Siebes 46, in dem die bereits feine Schlacke ausgesiebt wird und dessen Feinschlackeaustrag (0 bis 5 mm) mit 34_{b} bezeichnet ist.

Von der Knotenstelle 43 aus wird das aus den beiden Leitungen 42 und 44 kommende Haufwerk bis 45 mm einer Rotorprallmühle 50 zugeführt, in der -- wie gesagt -- spröde Haufwerksteile zerkleinert sowie duktile Partikel verkugelt werden. Dieser Rotorprallmühle 50 folgt wiederum ein Magnetabscheider 22_{b} mit Fe-Austrag 23_{b}. Diesem ist ein Eindeckersieb 52 mit Feinschlacke-Austrag 34_{c} nachgeordnet. An das Eindeckersieb 52 schließt anderseits ein Wirbelstromabscheider 54 an, von dem aus Nichtleiter über eine Austragsleitung 56 zur Rotorprallmühle 50 zurückgefördert werden, wohingegen Leiter durch eine bodenwärtige Leitung 58 zu einem Linearscheider als Metallseparator 60 gelangen, in welchem Kupfer- und Aluminiumanteile ausgeschieden sowie bei 61 bzw. 62 abgefördert werden.

Im Stammbaum der Fig. 2 sind -- wie bereits erörtert -- die Fe-Austräge der Magnetscheider 22, 22ₐ, 22_{b} mit 23, 23ₐ, 23_{b} sowie die Feinschlackeausträge (0 bis 5 mm) mit 34, 34ₐ bis 34_{c} bezeichnet.

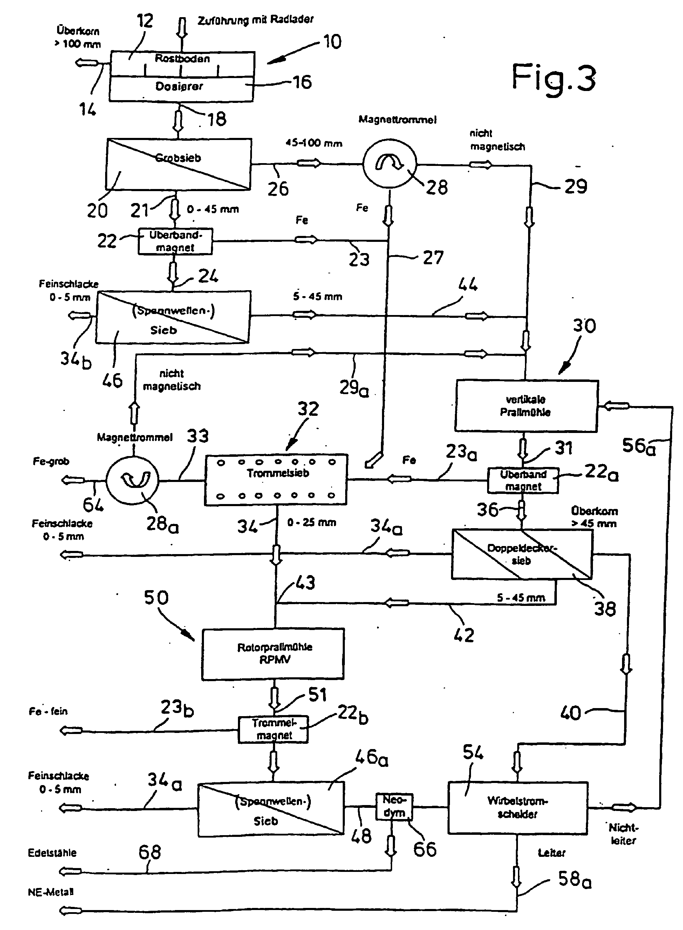

Der Stammbaum gemäß Fig. 3 lässt erkennen, dass die Austragsleitung 44 für eine Körnung von 5 bis 45 mm aus dem Spannwellensieb 46 -- vor der vertikalen Prallmühle 30an die Austragsleitung 29 für nicht magnetisches Haufwerk der Magnettrommel 28 angeschlossen ist, und zwar nahe einer parallelen Austragsleitung 29ₐ für nicht magnetisches Haufwerk, das von einer in die Fe-Austragsleitung 33 des Trommelsiebes 32 eingefügten Magnettrommel 28ₐ kommt. Der Austrag dieser Magnettrommel 28ₐ für Fe-Grobkorn ist mit 64 bezeichnet.

Im übrigen ist hier zwischen dem Austrag 31 der vertikalen Prallmühle 30 und dem Trommelsieb 32 ein Überbandmagnet als Magnetscheider 22ₐ vorgesehen, dessen Austragsleitung 36 auch hier einem Doppeldeckersieb 38 angefügt ist. Dessen Überkornaustrag 40 führt zum Wirbelstromscheider 54, dessen Nichtleiter-Austragsleitung 56ₐ mit der vertikalen Prallmühle 30 verbunden ist. Die Knotenstelle 43 der unteren Austragsleitung 42 wird hier mit dem Feinschlackeaustrag 34 des Trommelsiebes 32 gebildet, dies ebenfalls vor der Rotorprallmühle 50. Diese Rotorprallmühle 50 zerkleinert die Restschlacke sehr fein, poliert die anhaftende Restschlacke an den Ne-Metallen ab und verkugelt die duktilen Ne-Materialien wie Aluminium und Kupfer. Das dabei nochmals freigesetzte Feineisen wird nach der Rotorprallmühle 50 ebenfalls mittels eines Magneten ausgeschleust; denn deren Austrag 51 ist ein Trommelmagnet als Magnetabscheider 22_{b} zugeordnet, dem ein weiteres (Spannwellen-) Sieb 46ₐ mit Feinschlackeaustrag 34_{d} folgt. Dieses Feinsieb schleust nochmals Feinschlacke aus und führt das Überkorn übernicht gezeigte -- Luftseparationsdüsen, die leichte und flugfähige organische Bestandteile wie Folien und Papier ausblasen. Danach geht das Material durch eine Leitung 48 über einen besonders starken Magneten (Neodym) 66, der die durch die intensive Beanspruchung leicht magnetisierten Edelstähle abscheidet (Ableitung 68).

Ein wesentliches Aggregat der beschriebenen Anlage ist die Rotorprallmühle 50 mit den Vorteilen großer Durchsatzleistungen bei minimalem Verschleiß. Für den Einsatz von Shredderabfällen und Verbundstoffen sind spezielle Materialeinläufe und Materialausläufe konstruiert worden, gegebenenfalls mit einstellbarer Spaltweite sowie mit Einrichtungen zum Inertisieren, Kühlen, Heizen während der Zerkleinerung. Diese Rotorprallmühle 50 kann mit der dazu angepassten Verfahrenstechnik Shredderabfälle ohne vorherige Vorzerkleinerung in einer Verfahrenslinie in drei verwertbare Outputströme umwandeln.

Unterhalt eines an Radialstiften 74 -- eines Einlaufschachtes 76 mit einem Innendurchmesser d von etwa 380 mm im Deckel 78 der Rotorprallmühle 50 -- angreifenden Hebelarms 80 als Hebe- und Schwenkeinrichtung ist in einem zylindrischen Gehäuse 82 des Durchmessers e von 1 560 mm ein Rotor 84 mit einer keilriemengetriebenen Vertikalwelle 86 gelagert, von der in einer Ebene liegende Schlagwerkzeuge 88 radial in eine einzige Schlagbahn abragen; diese Schlagwerkzeuge 88 drehen sich gegenüber einem Ring aus Prallplatten 90 oberhalb eines auswechselbare Bleche 92 für das Mahlgut enthaltenden, etwa zylindrischen Auslaufraumes 94. In dieser Rotorprallmühle 50 kann während des Mahlens auch ein Trocknen des Mahlgutes -- gegebenenfalls zudem ein Kaltverspröden bzw. Inertisieren -- stattfinden.

Der Splitter des hier nachgeschalteten Wirbelstromscheiders 54 wird so eng eingestellt, dass er durch die Leitung 58ₐ nur sauberes NE-Metall abscheidet. Nicht verkugeltes Kupfer -- beispielsweise gerade Drähte --, das aufgrund seiner Form und Lage nicht vom erzeugten Wirbelstromfeld erfasst und weit genug abgelenkt wurde, wird mit der gröberen Schlacke, die auch noch Metalle eingeschlossen haben könnte, wieder in den Zerkleinerungskreislauf zurückgeführt. Das Überkorn aus dem Doppeldeckersieb 38 wird ebenfalls dem Wirbelstromscheider 54 zugeführt und nach dem Ausschleusen des NE-Metalles durch die Leitung 56ₐ zurück zur Prallmühle 30 geführt.

Durch dieses Verfahren kann man ohne manuelle Sortiertätigkeiten in einem kontinuierlichen Verfahren folgende Fraktionen erzeugen:
- Feinschlacke < 5 mm;
- grobes Eisen > 25 mm;
- feines Eisen < 25 mm;
- NE-Metalle > 5 mm;
- Edelstähle > 5 mm.

Die Feinschlacke ist aufgrund ihrer besonders geringen Metallanteile ein interessanter Baustoff für verschiedene Anwendungen wie etwa die in Fig. 1 erwähnten:
- Zuschlagsstoffe für den Straßen- und Wegebau;
- Zuschlagsstoffe für den Deponiebau;
- Abdeckmaterial im Deponiebau;
- Mineralischer Zuschlagsstoff für verschiedene bautechnische Produkte.

Um verwertbar zu sein, muss der Schrott bestimmten Kriterien genügen. Ein Hauptkriterium ist die Reinheit, die für den Einsatz im Stahlwerk mindestens 92 % betragen muss.

Besonders bei Schlacken aus Verbrennungsanlagen gibt es an dem -- mittels Magneten aussortierten -- Schrott Schlackeanhaftungen und sonstige Störstoffe (insbesondere Kupfer), die man vor einer Verwertung entfernen muss. Eine für diesen Zweck sehr effiziente Technik ist das sogenannte Trommeln. Hierbei wird der vorseparierte Schrott in eine Siebtrommel -- Trommelsieb 32 -- mit speziellen Einbauten aufgegeben und durch die Rotation und die Einbauten an der Wandung mitgenommen, hochgefördert und fällt dann wieder auf den Siebboden. Kurz vor dem Herunterfallen dreht sich das Material infolge der Schwerkraft und verursacht dabei durch die wirkenden Reibungskräfte ein Abreinigen der Schlackeanhaftungen. Der Reinigungseffekt ist dabei um so effizienter, je größer der Siebtrommeldurchmesser, je länger die Siebtrommel ist und je höher die einzelnen Teile in der Siebtrommel mitgenommen werden.

Durch die intensive Drehung, Reibung und Schlagbeanspruchung infolge des Herabfallens werden Hohlkörper entleert und Anhaftungen abgeschlagen bzw. abgerieben.

Die durch das Trommeln freigeschlagene Schlacke und das Feineisen werden durch die Lochung des Trommelsiebes 32 nach unten abgeführt und der Rotorprallmühle 50 zur weiteren Reinigung aufgegeben. Nach dieser separiert der Trommelmagnet 22_{b} das freigelegte Feineisen.

Am Ende des Trommelsiebes 32 wird das getrommelte Material über die Magnettrommel 28ₐ gefahren, um die freigeschlagene Schlacke von dem magnetischen Eisen zu trennen.

Durch die zuvor beschriebene Aufbereitung der Schlackeund die Erzeugung eines Schlackenfeinkorns -- werden die NE-Metalle zunächst freigelegt. Der eingesetzte Wirbelstromscheider 54 trennt die NE-Metalle aus dem Produktstrom heraus. Dabei wird der Splitter so eingestellt, dass die NE-Ausbeute maximal wird auf Kosten der Reinheit.

Die Rotorprallmühle 50 unterscheidet sich deutlich von den konventionellen in der Schlackenaufbereitung eingesetzten Prallmühlen. Der wesentliche Unterschied besteht darin, dass man zwischen den sich schnell drehenden Schlagwerkzeugen oder Hufeisenschlägern 88 und der feststehenden, um 360° mit Prallplatten 90 bestückten Prallwand einen variabel einstellbaren Spalt realisieren kann. Der Produktstrom wird der Rotorprallmühle über den zentralen Einlaufschacht 76 im Deckel 78 zugeführt und durch die Rotation nach außen in Richtung Prallwand beschleunigt. Auf dem Weg zur Prallwand werden die Teile von den Hufeisenschlägern 88 erfasst, durch Schlag zerkleinert, verkugelt bzw. gereinigt und auf die Prallwand abgeschleudert. Zurückprallendes Gut, das wiederum mit neuem Material zusammenprallt., trägt ebenfalls zu den beschriebenen Effekten bei. Diese Prozesse wiederholen sich so lange, bis das Material durch den Spalt zwischen Hufeisenschlägerspitze und Prallwand nach unten ausgetragen wird. Bei dem Durchgang durch den Spalt treten nochmals Scherkräfte auf, die ebenfalls einen Aufschluss-, Verkugelungs- und Reinigungseffekt ausüben.

Als Endprodukt erhält man eine NE-Fraktion, die nahezu vollständig von Anhaftungen und Störstoffen befreit ist und aufgrund der erzeugten Kugelform ein höheres Schüttgewicht aufweist. Durch diese hohe Reinheit in Verbindung mit der für die Metallschmelze ebenfalls optimalen Kugelform -- geringere Abbrandverluste als beim flachen Material, das gegebenenfalls auf der Schmelze schwimmt -- lassen sich deutlich höhere Metallerlöse erzielen.

Wie bei der Rückgewinnung des Eisens und der NE-Metalle ist auch bei den Edelstählen eine möglichst weitgehende Zerkleinerung der Schlacke Voraussetzung für eine Separation. Darüber hinaus benötigt man noch spezielle Starkfeldmagnete. Auch V2A-Stähle magnetisieren sich durch die intensiv wirkenden Reibungs- und Scherkräfte bei der mechanischen Zerkleinerung durch z. B. Rotorprallmühlen oder Granulatoren schwach. Mit entsprechend starken Magneten, den sog. Neodymmagneten 66, kann man diese schwach magnetisierten V2A-Stähle dann separieren.

Obwohl die zu separierenden Mengen relativ klein sind, ist aufgrund der hohen Wertigkeit für Edelstähle ein wirtschaftlicher Nutzen zu erzielen. Weiterhin erfährt die Schlacke durch die Entnahme der Edelstähle eine Qualitätsverbesserung aufgrund der Verringerung der in den Edelstählen enthaltenen Legierungselemente Chrom und Nickel.

## Patentansprüche

1. Anlage zum Rückgewinnen von Eisen- und NE-Metallen aus der Schlacke einer Müllverbrennungsanlage od.dgl. Einrichtung mit einer Siebstation (20), die sowohl mit dem Austrag (21) für Feinkorn als auch mit dem Austrag (26) für das Überkorn jeweils an einen Metallabscheider (22, 28) angeschlossen und dieser einer Prallmühle (50, 30) sowie letzterer auch ein Wirbelstromscheider (54) als Einrichtung zur Abscheidung von Behandlungsgut durch Verwirbelung zugeordnet ist, wobei an den Austrag (29) für nicht magnetisches Haufwerk des Metallabscheiders (28) für das Überkorn eine Mühle angeschlossen sowie im Austrag (31) der Prallmühle (30) ein Metallabscheider (22ₐ) vorgesehen ist,
**dadurch gekennzeichnet,**
**dass** dem Austrag (24, 29, 36) für nicht magnetisches Haufwerkje des vorgenannten Metallabscheiders (22, 22ₐ, 28) eine Prallmühle (50, 30) nachgeordnet, sowie an den Austrag (29) für nicht magnetisches Haufwerk des Metallabscheiders (28) für das Überkorn eine vertikale Prallmühle (30) zum Verkugeln der NE-Metalle angeschlossen und dem Austrag (23, 23ₐ, 27) für magnetisches Haufwerk des Metallabscheiders (22, 22ₐ, 28) eine weitere Siebstation (32) nachgeordnet ist.

2. Anlage nach Anspruch 1, **dadurch gekennzeichnet, dass** der Eingangssiebstation (20) ein Vorsieb (12) für eine Körnung von mehr als etwa 100 mm vorgeordnet ist.

3. Anlage nach Anspruch 1, **gekennzeichnet durch** ein Trommelsieb (32) als weitere Siebstation zum Nachreinigen von Eisenbestandteilen.

4. Anlage nach Anspruch 1 oder 3, **gekennzeichnet durch** einen Siebschnitt der weiteren Siebstation (32) von etwa 10 mm oder etwa 25 mm.

5. Anlage nach einem der Ansprüche 1 bis 4, **dadurch gekennzeichnet, dass** der Austrag (24 bzw. 36) für nicht magnetisches Haufwerk des Metallabscheiders (22 bzw. 22ₐ) der Eingangssiebstation (20) bzw. der vertikalen Prallmühle (30) jeweils in eine Siebstation (46 bzw. 38) zur Trennung von Feinkorn und Mittelkorn mündet.

6. Anlage nach Anspruch 5, **gekennzeichnet durch** ein Mittelkorn zwischen 5 mm und 45 mm.

7. Anlage nach Anspruch 5 oder 6, **gekennzeichnet durch** ein Doppeldeckersieb (38) als Siebstation nach der vertikalen Prallmühle (30) und/oder ein Spannwellensieb (46) nach dem Metallabscheider (22) der Eingangssiebstation (20).

8. Anlage nach Anspruch 5 oder 7, **dadurch gekennzeichnet, dass** der Austrag (44) für das Mittelkorn der Siebstation (46) nach dem Metallabscheider (22) der Eingangssiebstation (20) zum Einlauf der vertikalen Prallmühle (30) geführt ist.

9. Anlage nach einem der Ansprüche 5 bis 8, **dadurch gekennzeichnet, dass** der Austrag (42) für das Mittelkorn der Siebstation (46) nach der Eingangssiebstation (20) und/oder der Austrag (42) der Siebstation (38) nach der vertikalen Prallmühle (30) zu einer Rotorprallmühle (50) geführt ist.

10. Anlage nach einem der Ansprüche 5 bis 9, **dadurch gekennzeichnet, dass** der Austrag (40) für das Überkorn der Siebstation (38) nach der vertikalen Prallmühle (30) zu dieser zurückgeführt ist.

11. Anlage nach einem der Ansprüche 5 bis 9, **dadurch gekennzeichnet, dass** der Austrag (40) für das Überkorn der Siebstation (38) nach der vertikalen Prallmühle (30) zu einem Wirbelstromscheider (54) geführt ist.

12. Anlage nach Anspruch 9 oder 10, **dadurch gekennzeichnet, dass** dem Austrag (51) der Rotorprallmühle (50) ein Wirbelstromscheider (54) nachgeordnet ist.

13. Anlage nach Anspruch 11 oder 12, **dadurch gekennzeichnet, dass** der Wirbelstromscheider (54) einem Metallabscheider (22_{b}) der Rotorprallmühle (50) nachgeordnet ist und einer Austragsleitung (56) für Nichtleiter an die vertikale Prallmühle (30) bzw. an die Rotorprallmühle angeschlossen ist.

14. Anlage nach einem der Ansprüche 11 bis 13, **dadurch gekennzeichnet, dass** eine Austragsleitung (58) für Leitermaterial des Wirbelstromscheiders (54) an einem Metallseparator (60) mündet.

15. Anlage nach Anspruch 13 oder 14, **gekennzeichnet durch** eine Siebstation (46ₐ), die dem Metallabscheider (22_{b}) der Rotorprallmühle (50) nachgeordnet und vor einem Neodym (66) vorgesehen ist.

16. Anlage nach einem der Ansprüche 1 bis 15, **dadurch gekennzeichnet, dass** in der Rotorprallmühle (50) ein Rotor (84) mit Vertikalwelle (86) gelagert ist, von der in einer Ebene liegende Schlagwerkzeuge (88) radial in eine Schlagbahn abragen und gegenüber einem Ring aus Prallplatten (90) drehbar sind.

17. Anlage nach Anspruch 16, **dadurch gekennzeichnet, dass** die Schlagwerkzeuge (88) oberhalb eines auswechselbare Bleche (92) für das Mahlgut enthaltenden zylindrischen Auslaufraumes (94) drehbar angeordnet sind.

18. Anlage nach Anspruch 16 oder 17, **dadurch gekennzeichnet, dass** die Rotorprallmühle (50) zwischen den drehbaren Schlagwerkzeugen oder Hufeisenschlägern (88) und einer feststehenden, mit den Prallplatten (90) bestückten Prallwand einen variabel einstellbaren Spalt enthält.

19. Anlage nach Anspruch 17 oder 18, **dadurch gekennzeichnet, dass** der Auslaufraum (94) und die Schlagwerkzeuge (88) von einem Deckel (78) mit Einlaufschacht (76) übergriffen sind und der Deckel an einem Hebelarm (80) schwenkbar gelagert ist.

20. Verfahren für die Behandlung von metallhaltiger Schlacke aus einem Müllverbrennungsverfahren als Behandlungsgut, wobei das Haufwerk in eine Feinkornfraktion bis etwa 45 mm und ein Überkorn getrennt wird, und zwar unter Einsatz einer Anlage nach zumindest einem der voraufgehenden Patentansprüche, und der Anteil an Eisen nachgereinigt sowie der Anteil an NE-Metallen nachveredelt wird bei einer Reinheit der NE-Metalle von mehr als 90 %.

21. Verfahren nach Anspruch 20, **gekennzeichnet durch** eine Reinheit des Eisens von mehr als 90 %.

22. Verfahren nach Anspruch 20 oder 21, **dadurch gekennzeichnet, dass** das Unterkorn bei einer Siebgröße von 40 mm bis 50 mm nachsortiert wird.

23. Verfahren nach einem der Ansprüche 20 bis 23, **dadurch gekennzeichnet, dass** das Unterkorn bis etwa 40 mm bzw. 50 mm einem Magnetscheider (22) und das verbleibende Unterkorn bis etwa 100 mm einem anderen Magnetabscheider (28), insbesondere einer Magnettrommel, zugeführt werden.

24. Verfahren nach Anspruch 23, **dadurch gekennzeichnet, dass** die nicht magnetischen Anteile aus dem Magnetscheider (28) der höheren Kornfraktion einer vertikalen Prallmühle (30) zugeführt werden und darin die Schlacke gebrochen wird, wonach der Austrag der vertikalen Prallmühle einem Magnetscheider (22ₐ) zugeführt wird.

25. Verfahren nach einem der Ansprüche 20 bis 24, **dadurch gekennzeichnet, dass** die magnetischen Anteile des Haufwerkes aus dem Magnetabscheider (22, 22ₐ, 28) nach diesem einem Trennschnitt bei etwa 10 mm zugeführt werden

26. Verfahren nach einem der Ansprüche 20 bis 25, **dadurch gekennzeichnet, dass** die magnetischen Anteile des Haufwerkes aus dem Magnetabscheider (22, 28) nach diesem einem Trennschnitt bei etwa 25 mm zugeführt werden und das Unterkorn einer Rotorprallmühle (50) aufgegeben wird.

27. Verfahren nach Anspruch 26, **dadurch gekennzeichnet, dass** in der Rotorprallmühle (50) zumindest die NE-Metalle verkugelt werden.

28. Verfahren nach Anspruch 26 oder 27, **dadurch gekennzeichnet, dass** der nicht magnetische Austrag eines dem Trennschnitt dienenden Siebes (46) der Rotorprallmühle (50) zugeführt wird.

## Claims

1. Plant for the recovery of ferrous and non-ferrous metals from the slag of a refuse incinerator or the like equipment with a screening station (20) which is connected both by the discharge (21) for fine particles and by the discharge (26) for oversized particles in each case to a metal separator (22, 28), and this metal separator is associated with an impact crusher (50, 30), and also associated with the latter is an eddy-current separator (54) as a device for the separation of material to be treated by swirling, a grinder being connected to the discharge (29) for non-magnetic muck of the metal separator (28) for the oversized particles, and a metal separator (22ₐ) being provided in the discharge (31) of the impact crusher (30), **characterised in that** behind the discharge (24, 29, 36) for non-magnetic muck of each above-mentioned metal separator (22, 22ₐ, 28) is mounted an impact crusher (50, 30), and connected to the discharge (29) for non-magnetic muck of the metal separator (28) for the oversized particles is a vertical impact crusher (30) for rolling the non-ferrous metals into a ball, and behind the discharge (23, 23ₐ, 27) for magnetic muck of the metal separator (22, 22ₐ, 28) is mounted a further screening station (32).

2. Plant according to claim 1, **characterised in that** in front of the input screening station (20) is mounted a preliminary screen (12) for a particle size of more than about 100 mm.

3. Plant according to claim 1, **characterised by** a drum screen (32) as a further screening station for subsequently cleaning ferrous components.

4. Plant according to claim 1 or 3, **characterised by** a screen section of the further screening station (32) of about 10 mm or about 25 mm.

5. Plant according to any of claims 1 to 4, **characterised in that** the discharge (24 or 36) for non-magnetic muck of the metal separator (22 or 22a) of the input screening station (20) or of the vertical impact crusher (30) leads in each case into a screening station (46 or 38) for the separation of fine particles and medium particles.

6. Plant according to claim 5, **characterised by** a medium particle size of between 5 mm and 45 mm.

7. Plant according to claim 5 or 6, **characterised by** a double-decker screen (38) as a screening station behind the vertical impact crusher (30) and/or a flip-flow screen (46) behind the metal separator (22) of the input screening station (20).

8. Plant according to claim 5 or 7, **characterised in that** the discharge (44) for the medium particles of the screening station (46) behind the metal separator (22) of the input screening station (20) leads to the inlet of the vertical impact crusher (30).

9. Plant according to any of claims 5 to 8, **characterised in that** the discharge (42) for the medium particles of the screening station (46) behind the input screening station (20) and/or the discharge (42) of the screening station (38) behind the vertical impact crusher (30) leads to a rotor impact crusher (50).

10. Plant according to any of claims 5 to 9, **characterised in that** the discharge (40) for the oversized particles of the screening station (38) behind the vertical impact crusher (30) leads back to the latter.

11. Plant according to any of claims 5 to 9, **characterised in that** the discharge (40) for the oversized particles of the screening station (38) behind the vertical impact crusher (30) leads to an eddy-current separator (54) .

12. Plant according to claim 9 or 10, **characterised in that** behind the discharge (51) of the rotor impact crusher (50) is mounted an eddy-current separator (54).

13. Plant according to claim 11 or 12, **characterised in that** the eddy-current separator (54) is mounted behind a metal separator (22_{b}) of the rotor impact crusher (50), and a discharge pipe (56) for non-conductors is connected to the vertical impact crusher (30) or to the rotor impact crusher.

14. Plant according to any of claims 11 to 13, **characterised in that** a discharge pipe (58) for conductor material of the eddy-current separator (54) leads to a metal separator (60).

15. Plant according to claim 13 or 14, **characterised by** a screening station (46ₐ) which is mounted behind the metal separator (22_{b}) of the rotor impact crusher (50) and provided in front of a neodymium (66).

16. Plant according to any of claims 1 to 15, **characterised in that** in the rotor impact crusher (50) is mounted a rotor (84) with vertical shaft (86) from which impact tools (88) lying in one plane project radially into an impact path and are rotatable relative to a ring of baffle plates (90).

17. Plant according to claim 16, **characterised in that** the impact tools (88) are arranged rotatably above a cylindrical outlet chamber (94) containing exchangeable plates (92) for the material to be crushed.

18. Plant according to claim 16 or 17, **characterised in that** the rotor impact crusher (50) contains a variably adjustable gap between the rotatable impact tools or horseshoe beaters (88) and a stationary baffle wall fitted with the baffle plates (90).

19. Plant according to claim 17 or 18, **characterised in that** the outlet chamber (94) and the impact tools (88) are covered by a cover (78) with inlet shaft (76), and the cover is mounted pivotably on a lever arm (80).

20. Method for the treatment of metal-containing slag from a refuse incineration method as material to be treated, wherein the muck is separated into a fine-particle fraction of up to about 45 mm and oversized particles, using a plant according to one or more of the preceding patent claims, and the iron fraction is subsequently cleaned and the fraction of non-ferrous metals is subsequently refined, with a purity of non-ferrous metals of more than 90 %.

21. Method according to claim 20, **characterised by** a purity of iron of more than 90 %.

22. Method according to claim 20 or 21, **characterised in that** the undersized particles with a screen size of 40 mm to 50 mm are subsequently graded.

23. Method according to any of claims 20 to 23, **characterised in that** the undersized particles of up to about 40 mm or 50 mm are delivered to a magnetic separator (22), and the remaining undersized particles of up to about 100 mm are delivered to another magnetic separator (28), in particular a magnetic drum.

24. Method according to claim 23, **characterised in that** the non-magnetic fractions from the magnetic separator (28) of the higher particle fraction are delivered to a vertical impact crusher (30) and the slag is broken therein, whereupon the discharge of the vertical impact crusher is delivered to a magnetic separator (22ₐ).

25. Method according to any of claims 20 to 24, **characterised in that** the magnetic fractions of the muck from the magnetic separator (22, 22ₐ, 28) after the latter are delivered to a separating section at about 10 mm.

26. Method according to any of claims 20 to 25, **characterised in that** the magnetic fractions of the muck from the magnetic separator (22, 28) after the latter are delivered to a separating section at about 25 mm and the undersized particles are fed to a rotor impact crusher (50).

27. Method according to claim 26, **characterised in that** in the rotor impact crusher (50) at least the non-ferrous metals are rolled into a ball.

28. Method according to claim 26 or 27, **characterised in that** the non-magnetic discharge of a screen (46) used for the separating section is delivered to the rotor impact crusher (50).

## Revendications

1. Installation pour la récupération de métaux ferreux et non ferreux des scories d'un incinérateur d'ordures ménagères ou autre installation similaire, comportant un poste de criblage (20) qui, pour l'évacuation (21) des tamisats fins et l'évacuation (26) des refus supérieurs, est raccordé dans chaque cas à un séparateur de métaux (22, 28), auquel est associé respectivement un broyeur à percussion (50, 30) et ce dernier est également associé à un séparateur par courants de Foucault (54) faisant fonction de dispositif de séparation du matériau à traiter par mouvements tourbillonnaires, un broyeur étant raccordé à la voie de sortie (29) des matériaux non magnétiques sortant du séparateur de métaux (28) pour les refus supérieurs et un séparateur de métaux (22ₐ) étant prévu dans la voie de sortie (31) des matériaux sortant du broyeur à percussion (30),
**caractérisé en ce qu'**un broyeur à percussion (50, 30) est monté en aval de la voie de sortie (24, 29, 36) des matériaux non magnétiques sortant de chaque séparateur de métaux (22, 22ₐ, 28) susmentionné, ainsi qu'un broyeur à percussion vertical (30), destiné à former les métaux non ferreux en billes, est raccordé à la voie de sortie (29) des matériaux non magnétiques sortant du séparateur de métaux (28) pour les refus supérieurs, et un poste de criblage (32) supplémentaire est monté en aval de la voie de sortie (23, 23ₐ, 27) pour les matériaux magnétiques sortant du séparateur de métaux (22, 22ₐ, 28).

2. Installation selon la revendication 1, **caractérisée en ce qu'**un crible préparatoire (12) pour une granulométrie supérieure à environ 100 mm est monté en amont du poste de criblage d'entrée (20).

3. Installation selon la revendication 1, **caractérisée en ce qu'**un trommel (32) est utilisé comme poste de criblage supplémentaire pour une épuration ultérieure des constituants ferreux.

4. Installation selon la revendication 1 ou 3, **caractérisée par** une maille de tamis d'environ 10 mm ou d'environ 25 mm dans le poste de criblage (32) supplémentaire.

5. Installation selon l'une quelconque des revendications 1 à 4, **caractérisée en ce que** la voie de sortie (24 et 36) des matériaux non magnétiques sortant respectivement du séparateur de métaux (22 et 22ₐ) du poste de criblage d'entrée (20) et du broyeur à percussion vertical (30), débouche respectivement dans un poste de criblage (46 et 38) en vue de la séparation des tamisats de granulométrie fine et moyenne.

6. Installation selon la revendication 5, **caractérisée par** un tamisat de granulométrie moyenne entre 5 mm et 45 mm.

7. Installation selon la revendication 5 ou 6, **caractérisée par** un crible à deux étages (38) formant un poste de criblage en aval du broyeur à percussion vertical (30) et/ou un crible oscillant (46) en aval du séparateur de métaux (22) du poste de criblage d'entrée (20).

8. Installation selon la revendication 5 ou 7, **caractérisée en ce que** la voie de sortie (44) des tamisats moyens du poste de criblage (46), situé en aval du séparateur de métaux (22) du poste de criblage d'entrée (20), est guidée vers l'entrée du broyeur à percussion vertical (30).

9. Installation selon l'une quelconque des revendications 5 à 8, **caractérisée en ce que** la voie de sortie (42) des tamisats moyens du poste de criblage (46), situé en aval du poste de criblage d'entrée (20), et/ou la voie de sortie (42) du poste de criblage (38), situé en aval du broyeur à percussion vertical (30), sont guidées vers un broyeur déchiqueteur à percussion rotatif (50).

10. Installation selon l'une quelconque des revendications 5 à 9, **caractérisée en ce que** la voie de sortie (40) des refus supérieurs du poste de criblage (38), situé en aval du broyeur à percussion vertical (30), retourne vers ce dernier.

11. Installation selon l'une quelconque des revendications 5 à 9, **caractérisée en ce que** la voie de sortie (40) des refus supérieurs du poste de criblage (38), situé en aval du broyeur à percussion vertical (30), est guidée vers un séparateur à courants de Foucault (54).

12. Installation selon la revendication 9 ou 10, **caractérisée en ce qu'**un séparateur à courants de Foucault (54) est monté en aval de la voie de sortie (51) du broyeur déchiqueteur à percussion rotatif (50).

13. Installation selon la revendication 11 ou 12, **caractérisée en ce que** le séparateur à courants de Foucault (54) est monté en aval d'un séparateur de métaux (22_{b}) du broyeur déchiqueteur à percussion rotatif (50), et une conduite d'évacuation (56) des matériaux non électroconducteurs est reliée au broyeur à percussion vertical (30) ou, respectivement, au broyeur déchiqueteur à percussion rotatif (50).

14. Installation selon l'une quelconque des revendications 11 à 13, **caractérisée en ce qu'**une conduite d'évacuation (58) des matériaux électroconducteurs du séparateur à courants de Foucault (54) débouche dans un séparateur de métaux (60).

15. Installation selon la revendication 13 ou 14, **caractérisée par** un poste de criblage (46ₐ), qui est monté en aval du séparateur de métaux (22_{b}) du broyeur déchiqueteur à percussion rotatif (50), et est prévu en amont d'un néodyme (66).

16. Installation selon l'une quelconque des revendications 1 à 15, **caractérisée en ce que** dans le broyeur déchiqueteur à percussion rotatif (50) est monté un rotor (84) à arbre vertical (86), à partir duquel des outils de percussion (88), situés dans un plan horizontal, s'avancent dans le sens radial dans une trajectoire de percussion et tournent par rapport à un anneau formé par des plaques de rebondissement (90).

17. Installation selon la revendication 16, **caractérisée en ce que** les outils de percussion (88) sont montés rotatifs au dessus d'une chambre d'évacuation (94) cylindrique, comportant des tôles (92) remplaçables pour les produits broyés.

18. Installation selon la revendication 16 ou 17, **caractérisée en ce que** le broyeur déchiqueteur à percussion rotatif (50) comporte une fente réglable de manière variable entre les outils de percussion rotatifs ou marteaux en fer à cheval (88) et une paroi de rebondissement fixe, revêtue des plaques de rebondissement (90).

19. Installation selon la revendication 17 ou 18, **caractérisée en ce que** la chambre d'évacuation (94) et les outils de percussion (88) sont surmontés d'un couvercle (78) avec une trémie d'admission (76), et le couvercle est monté pivotant sur un bras de levier (80).

20. Procédé de traitement de scorie métallifère issue d'un procédé d'incinération d'ordures ménagères et constituant le matériau à traiter, dans lequel procédé le matériau est séparé en une fraction de granulométrie fine jusqu'à environ 45 mm et en un refus supérieur moyennant l'utilisation d'une installation selon au moins l'une quelconque des revendications précédentes, et la part de fer est soumise à une épuration ultérieure et la part de métaux non ferreux est enrichie ultérieurement à une pureté des métaux non ferreux supérieure à 90 %.

21. Procédé selon la revendication 20, **caractérisé par** une pureté du fer supérieure à 90 %.

22. Procédé selon la revendication 20 ou 21, **caractérisé en ce que** les refus inférieurs à une dimension de la maille de tamis de 40 à 50 mm sont soumis à un tri ultérieur.

23. Procédé selon l'une quelconque des revendications 20 à 23, **caractérisé en ce que** les refus inférieurs jusqu'à environ 40 mm et 50 mm sont acheminés vers un séparateur magnétique (22) et les refus inférieurs restants, jusqu'à environ 100 mm, sont acheminés vers un autre séparateur magnétique (28), en particulier un tambour magnétique.

24. Procédé selon la revendication 23, **caractérisé en ce que** les parts non magnétiques sortant du séparateur magnétique (28) de la fraction de granulométrie plus élevée sont acheminées vers un broyeur à percussion vertical (30) et la scorie est broyée dans celui-ci, à la suite de quoi la voie de sortie du broyeur à percussion vertical est guidée vers un séparateur magnétique (22ₐ).

25. Procédé selon l'une quelconque des revendications 20 à 24, **caractérisé en ce que** les parts magnétiques du matériau sortant du séparateur magnétique (22, 22ₐ, 28) sont acheminées en aval de celui-ci vers une séparation granulométrique autour de 10 mm.

26. Procédé selon l'une quelconque des revendications 20 à 25, **caractérisé en ce que** les parts magnétiques du matériau sortant du séparateur magnétique (22, 28) sont acheminées en aval de celui-ci vers une séparation granulométrique autour de 25 mm et les refus inférieurs sont acheminés vers un broyeur déchiqueteur à percussion rotatif (50)

27. Procédé selon la revendication 26, **caractérisé en ce qu'**au moins les métaux non ferreux sont formés en billes dans le broyeur déchiqueteur à percussion rotatif (50).

28. Procédé selon la revendication 26 ou 27, **caractérisé en ce que** les matériaux non magnétiques du crible (46) utilisé pour la séparation granulométrique, sont acheminés vers le broyeur déchiqueteur à percussion rotatif (50).
